# EUROPEAN PATENT APPLICATION

(11) **EP 1 923 424 A1**
(43) Date of publication of application: **21.05.2008**
(21) Application number: 06255920.8
(22) Date of filing: 20.11.2006
(51) Int. Cl.: C08K 3/08, C08L 23/10

(54) **Polymer composition**

(71) Applicant: Borealis Technology Oy, 06101 Porvoo (FI)
(72) Inventor: Oysaed, Harry, 3960 Stathelle (NO); Johansen, Geir Morten, 3943 Porsgrunn (NO); Van Damme, Jean Paul Borealis Polymers NV, Camp. Mechelen, 2800 Mechelen (BE)
(74) Representative: Campbell, Neil Boyd

(57) **Abstract**

Use of at least one reheating agent to broaden the processing window in the injection stretch blow moulding of polypropylene.

## Description

This invention relates to the use of a particular polypropylene based polymer composition to broaden the processing window of propylene polymers in an injection stretch blow moulding (ISBM) process, e.g. where reheat of a preform occurs. In addition, the invention concerns a mixture of particular propylene polymers and certain reheating agents to form a composition of great utility in such processing window broadening.

The ISBM process is well known in the art and involves producing a preform by injection moulding followed by stretching and blowing the preform in order to induce biaxial orientation in the solid phase. Two types of ISBM process are practised. In the single-stage process a preform is injection moulded, stretched and blown before it is allowed to cool. In the two-stage process, the injection moulded preform is allowed to cool before it is reheated, stretched and blown into a container.

ISBM processes are used to make containers such as bottles and jars having very good optical properties. Poly(ethylene terephthalate) (PET) is the most commonly used polymer for ISBM applications because PET has good processing behaviour and produces high quality bottles having good optical and barrier properties.

PET is however a relatively expensive polymer and cannot function at higher temperatures due to poor heat resistance. The skilled man is thus looking for alternatives to PET for ISBM applications.

Polypropylene is cheaper than PET and demonstrates better heat resistance than PET. In some applications, particularly when high temperature resistance is required, it would therefore be advantageous to use polypropylene instead of PET in ISBM processes. However, polypropylene has a narrow processing window when used in ISBM processes, i.e. polypropylene can be stretched and blown only over a narrow temperature range. Thus, polypropylene typically possess a 4 °C processing window, often even narrower, whereas PET can be processed over a 15°C temperature range. A narrow processing window is not favourable industrially since temperature control during ISBM becomes a major issue leading to a potentially high scrap rate.

The present inventors have therefore been addressing the problem of broadening the processing window of polypropylene whilst trying to maintain satisfactory optical and mechanical properties required of ISBM containers. One solution involves the use of propylene polymers of multimodal molecular weight distribution as such polymers have a broader melting point distribution.

The present inventors have surprisingly found however, that the processing window for an ISBM process can be broadened by mixing the propylene polymer with a reheating agent.

The use of reheating agents is known in the art but only in connection with increasing the speed at which polypropylene can be heated in an ISBM process where reheating is carried out to achieve the necessary preform temperature for stretching and blowing. Thus, in WO2004/083294, the use of reheating agents to shorten reheating time for unimodal polypropylene is described. A wide variety of reheating agents are suggested but the examples show only that a reheating agent allows more rapid heating of the propylene composition as the reheating agent readily absorbs infra red radiation which is the normal source of heat in ISBM.

WO2004/0099301 describes the use of a reheat agent to improve haze but which also allows improved processing rates. As the reheating step can be achieved more rapidly, cycle times are also said to be reduced.

WO2006/018777 describes the use of reheat agents to improve heat up rates for unimodal propylenes or propylene blends again to improve cycle times whilst maintaining comparable preform temperatures.

Thus, whilst the use of reheating agents in combination with certain propylene polymers is not new, no one has realised the benefits of this combination on the processing window in an ISBM process.

Thus, viewed from one aspect, the invention provides use of at least one reheating agent to broaden the processing window in the injection stretch blow moulding of polypropylene. The invention is of particularly utility in ISBM processes where a preform is reheated.

The combination of certain polypropylene polymers with certain reheating agents is however new and such compositions exhibit broadened processing windows over the use of polypropylene alone.

Thus, viewed from another aspect the invention provides a composition comprising a multimodal propylene polymer and at least one reheating agent selected from antimony, titanium, copper, manganese, iron and tungsten.

Viewed from another aspect the invention provides a method of broadening the processing window of a polypropylene polymer in an ISBM process comprising adding to said polypropylene at least one reheating agent.

Viewed from another aspect the invention provides a process for the formation of an article comprising:
(I) mixing at least one reheating agent with a polypropylene polymer;
(II) extruding the resulting mixture and injecting the extrudate into a mould to form a preform:
(III) allowing the preform to cool;
(IV) reheating the preform to a temperature in the range 100 to 160°C; and
(V) stretching and blowing the preform to form an article.

Viewed from another aspect the invention provides a process for the formation of an article comprising:
(I) mixing at least one reheating agent with a polypropylene polymer;
(II) extruding the resulting mixture and injecting the extrudate into a mould to form a preform: and
(III) stretching and blowing the preform to form an article without allowing the preform to cool.

The reheating agent is preferably a compound that absorbs radiation of wavelength 500 nm to 2000 nm, which are the typical wavelengths of the radiation from infra-red lamps commonly used in heating in injection stretch blow moulding. The reheating agent may be antimony, titanium, copper, manganese, iron and tungsten, where antimony is most preferred. The reheating agent also may be particles of carbon black, graphite, infra-red absorbing dyes or other infra-red absorbing material. It is also possible to employ mixtures of reheating agents although it is preferred if only a single reheating agent is employed.

Antimony and carbon black are highly preferred reheating agents, and antimony is particularly preferred.

In one embodiment, e.g. when the reheating agent is carbon black, it is preferred if the reheating agent is added to the propylene polymer in particulate form. In this regard, the reheating agent is incorporated into the polypropylene in the form of particles having particle sizes in the range of about 10 nanometers (nm) to about 100 micrometers, and more preferably in the range of 10 nm to 10 µm.

It is preferred however, if the reheating agent is generated within the polypropylene composition by in situ chemical reduction of a metal compound with a reducing agent. Thus, a reheating agent precursor may take the form of a metal compound containing one or more of antimony, titanium, copper, manganese, iron and tungsten, which can be present with a reducing agent such as an organic phosphorous acid or inorganic phosphorous acid, or tannic, gallic, and pyrogallic acid, or hydrazine, or sulphites, or tin II salts, nickel hydroxide or any organic or inorganic compound with an electrochemical potential sufficient to reduce the metal compounds to the metallic state. Preferably, the metal compound is antimony triglycolate or antimony (III) trioxide and the reducing agent is hypophosphorous acid.

Antimony as reheating agent can thus be formed by an in situ chemical reduction of an antimony compound with a reducing agent, such as hypophosphorous acid or other organic phosphorous acid or inorganic phosphorous acid. Preferred antimony compounds include antimony triglycolate (ATG), antimony triacetate (ATA) or antimony trioxide (ATO). The hypophosphorous acid reduces antimony compounds to antimony, which is dispersed in the polypropylene composition.

Preferably, the reheating agent is incorporated into the polypropylene polymer in an amount in the range of about 0,1 ppm to 1000 ppm, more preferably from 1 ppm to 350 ppm, most preferably from 2 ppm to 50 ppm, especially 5 to 20 ppm. In general, the higher the amount of reheating agent added, the more pronounced the broadening of the processing window will be.

As a further alternative, the reheating agents can be incorporated into a polypropylene composition in high concentration to form a masterbatch. The masterbatch may then be blended with polypropylene having a different (typically lower) concentration of reheating agent or preferably no reheating agent at all to form a polypropylene composition containing reheating agent in desired concentration.

In this embodiment, the reheating agent may be present in the masterbatch in an amount in the range of 50 ppm to 25,000 ppm, preferably less than 1250 ppm. The amount of masterbatch component to be mixed with the non masterbatch polymer composition will vary depending on the amount of reheating agent in the masterbatch but up to 5 wt%, e.g. up to 1 wt% may be appropriate.

The reheating agent is added to a polypropylene polymer. By polypropylene polymer is meant a polymer in which at least 70%, preferably at least 80% by weight of the polymer comprises propylene monomer units. In one embodiment the polypropylene polymer may be a homopolymer, i.e. where substantially all, e.g. at least 99.9% wt of the monomer units are derived from propylene however copolymers of propylene are preferred. The term copolymer is used herein to cover the combination of propylene with at least one other comonomer, preferably with one comonomer only.

Preferably, the polypropylene polymer is a copolymer with at least one C₂₋₁₀-alpha-olefin comonomer such as ethylene, butene or hexene, especially ethylene. The amount of comonomer present may vary, however suitable ranges are from 1% to 30%, preferably 2 to 8% by weight, such as between 1 to 4 wt%, especially between 2 and 3.5 wt% (relative to propylene).

Preferred polypropylene polymers for use in the invention are heterophasic block copolymers or more preferably random propylene copolymers. The propylene polymer, whatever its nature, may have a density in the range 890-925 kg/m³ (ISO 1183), e.g. 900-920 kg/m³. It may have an MFR₂ in the range 0.05 to 50 g/10min, preferably 1 to 40 g/10min, such as 2 to 30 g/10 min, preferably 3 to 35 g/10min when measured according to ISO 1133 at 230 °C and a load of 2.16 kg. Preferably the melt flow rate is 6 to 30 g/10 min, most preferably 8 to 30 g/10 min, e.g. about 20 g/10min.

The propylene polymer of use in this invention may be unimodal or multimodal. In a unimodal polypropylene its molecular weight profile comprises a single peak By multimodal, preferably bimodal, is meant that its molecular weight profile does not comprise a single peak but instead comprises the combination of two or more peaks (which may or may not be distinguishable) centred about different average molecular weights as a result of the fact that the polymer comprises two or more separately produced components, e.g. blended components or more preferably components prepared in situ. As noted above, it is believed that the use of multimodal polymers contributes to broadening the processing window of propylene polymers in ISBM processes. The inventors have shown that still further broadening can be achieved if a reheating agent is used in conjunction with a multimodal polypropylene polymer. However, whilst the invention is suitable for use with multimodal polymers, its benefits might be most striking with unimodal polymers where there is no multimodality to additional contribute to a broadened processing window.

Multimodal propylene polymers will have at least two components. These can be prepared separately and blended or prepared together, preferably in a multistage polymerisation.

Multimodal polymers of use in this invention may therefore have a composition comprising:
(A) a polypropylene homopolymer or a propylene random copolymer comprising propylene and up to 10 weight % of comonomer selected from ethylene and/or C₄₋₁₀ alpha olefin; and
(B) a random copolymer of propylene and comonomer selected from ethylene and/or C₄₋₁₀ alpha olefin.

The composition may contain further components if desired however, the multimodal polymer described herein preferably comprises only two polymer components, A and B.

The multimodal polymer composition may comprise 10 to 90 wt % of polymer A, preferably 30 to 70 wt %, more preferably 40 to 60 wt % and most preferably 45 to 55 wt %. Conversely therefore, the composition preferably comprises 10 to 90 wt % of polymer B, preferably 30 to 70 wt %, more preferably 40 to 60 wt % and most preferably 45 to 55 wt %.

Polymer A preferably comprises up to 3.5 wt % comonomer, more preferably up to 2.5 wt % comonomer. Where polymer A is copolymeric, the comonomer is preferably ethylene. The comonomer in polymer (B) is preferably ethylene.

Such multimodal polymers may be prepared by simple blending, by two or more stage polymerisation or by the use of two or more different polymerisation catalysts in a one stage polymerisation. Preferably however they are produced in a two-stage polymerisation using the same catalyst, e.g. a metallocene catalyst or preferably a Ziegler-Natta catalyst, in particular a slurry polymerisation in a loop reactor followed by a gas phase polymerisation in a gas phase reactor.
Conventional cocatalysts, supports/carriers, electron donors etc. can be used.

A loop reactor - gas phase reactor system is marketed by Borealis A/S, Denmark as a BORSTAR reactor system. The polymer of the invention is thus preferably formed in a two stage process comprising a first slurry loop polymerisation followed by gas phase polymerisation in the presence of a Ziegler-Natta catalyst.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerisation may if desired be effected under supercritical conditions.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with the monomer (i.e. propylene and ethylene when required).

Preferably, component A of the polymer of the invention is produced in a continuously operating loop reactor where propylene (and comonomer when required) are polymerised in the presence of a polymerisation catalyst as stated above and a chain transfer agent such as hydrogen. The diluent is typically an inert aliphatic hydrocarbon, preferably isobutane or propane.

Component B can then be formed in a gas phase reactor using the same catalyst. Prepolymerisation can be employed as is well known in the art. Ziegler-Natta catalysts are preferred. The nature of the Ziegler-Natta catalyst is described in numerous prior publications, e.g. US 5234879.

Alternatively, the polymers of the invention can be made by blending two random copolymers of propylene or by blending one random copolymer with a polypropylene homopolymer in a conventional blending apparatus.

Random copolymers of propylene and propylene homopolymers of use in this invention are commercially available from various suppliers, e.g. Borealis A/S.

In addition to the polymer composition of the invention can include minor amounts of standard polymer additives such as polymer processing agent, nucleating agents, anti-oxidants, UV stabilisers etc. It is also within the scope of the invention for the polymer composition claimed to be mixed with other alpha olefin polymers.

The use of the polymer composition of the invention broadens the processing window for an ISBM process using that polymer. By broadening the processing window is meant therefore that the temperature range at which polymer compositions comprising reheating agent can be successfully stretched and blow moulded in the ISBM process is broader than for an otherwise identical polymer without reheating agent added.

This processing window is measured by stretch blow moulding of 300 ml polypropylene bottles on a one-cavity SIG Corpoplast LB01HR machine from 2.8 mm thick, 14 g pre-forms. This machine is equipped with two heater boxes, each having 5 IR lamps (L1-L5), but only one box was used in the determination of processing windows. L1 and L2 were 2500 watt lamps and L3, L4 and L5 were 2000 watt. The setting ratio of the lamps in the heater box was L1/L2/L3/L4/L5 46/57/85/85/54. All preforms are heated for the same period of time. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling is provided to prevent surface melting. Cooling is carried out at 80% of the fan capacity. The preform is rotated on a mandrel throughout heating and conditioning at a speed of 100 rpm. After CT2, all bottles are blown under the same conditions. The preform is brought into the bottle mould and first stretched at a speed of 1000 mm/s. A pressure of 6 bar for 1.2 seconds was then used to blow up the bottle.

For each sample, the total heating energy was changed in steps and the resulting pre-form temperatures recorded to find the upper preform temperature and lower preform temperature at which bottles without visible failures can be blown. This range is defined as the processing window of biaxial stretching of bottles.

Visible failures will be readily determined by those skilled in the art. For example, temperatures that are too low for stretching causes the stretch rod to puncture the preform. Temperatures that are too high for stretching cause the polymer to melt and leads to variations in the thickness of the blown articles.

The equipment needed to determine the processing window is described in detail in the examples but will be known to the skilled man.

The processing window should be at least 4°C, e.g. at least 5°C, preferably at least 6°C, more preferably at least 7°C. The processing window should be broadened by at least 1°C, preferably at least 2°C, e.g. at least 3°C, especially at least 5°C.

It will be appreciated that the processing window, as defined herein is measured on 2.8 mm, 14 g preforms. Variation in the weight of the preform affects the breadth of the processing window. Thinner preforms or lighter preforms tend to have broader processing windows than heavier preforms.

Thus, it is preferred if, irrespective of the weight of the preform, the processing window is broadened by at least 20%, e.g. at least 30%, preferably at least 40%, especially at least 50%, most especially at least 100%.

The polypropylene polymer composition comprising reheating agent is used for the manufacture of injection stretch blow moulded articles. Injection stretch blow moulding is a known process which involves certain steps. First, a preform is injection moulded from a polypropylene composition containing at least one reheating agent. The polypropylene composition is heated to melt the composition to form a flowable polymer melt that is introduced by injection into the mould. The injection mould has a cavity and a mating ram to form the preform into the desired shape, e.g. one having threaded neck portion and a bottle body portion. The preform can then be removed from the mould, cooled and stored until it is ready to be formed into an article or the preform can be stretched and blown straight away.

The conventional use of reheating agents is only with an ISBM process where the preform is cooled and stored before being reheated for forming into a container. The present inventors have realised that the use of reheating agents also has utility in a process where no cooling takes place as they will broaden the processing window during the stretching and blowing phase. Previously, the skilled man would not have used reheating agents in a process where the preform was used immediately after injection moulding as no reheating occurs. This forms a particularly advantageous aspect of the invention.

The invention can also be used when reheating does occur. Thus, when article formation is required from a cooled preform, the preform is held within a reheating cavity and heated, typically by infra red radiation. The preform is normally rotated to homogenise heating. Reheating can be conducted from the outside or inside or from both the outside and the inside the preform, although heating from the outside only is the most common technique. When heating from the outside of the preform only, it will be clear that the outside of the preform heats much more rapidly than the inside of the preform as it is nearer the heat source. The use of the reheating agent allows the inside of the preform to be heated more rapidly as heat transfer within the preform is more efficient when a reheating agent is present.

When the preform reaches the desired temperature, the reheated preform is then ready for stretch blow moulding. The preform is placed within a suitably shaped mould and a gas, such as air or nitrogen, is injected into the internal volume of the preform through a nozzle as a push rod forces the polypropylene composition to expand outwardly to fill the mould. This is the stretching and blowing stage of the process where the processing window of the material is narrow for polymer compositions without reheating agent.

During this step the material becomes biaxially oriented which improves the physical and optical properties of the article, as well as improving the barrier properties.

The stretching temperatures used are normally between 110°C and 160 °C, e.g. 130°C. Stretching speeds may range from 20 to 60 m/min in both TD and MD.

Control of the temperature of the polymer during the biaxial stretching step is critical. If the temperature is too high the stretched polymer will include areas of melted polymer, which reduces the molecular orientation, and will show variation in sample thickness. If the temperature is too low it will not be possible to biaxially stretch the polymer without the polymer failing. By broadening the processing window for any given polymer composition, the temperature range over which the polymer can in practice be biaxially stretched is widened.

The reheating agents may be combined with the polypropylene polymer in an convenient fashion. As one alternative, the reheating agent may be directly mixed with the polypropylene prior to introducing the mixture to an injection mould to form the preform. Preferably however, the reheating agent is mixed with the polypropylene prior to extrusion and thus extruded with the polypropylene forming a homogeneous polypropylene composition.

As noted above, it is within the scope of the invention for the reheating agent to be generated within the polypropylene composition by in situ chemical reduction of a metal compound with a reducing agent. Thus, a reheating agent precursor may take the form of a metal compound containing one or more of antimony, titanium, copper, manganese, iron and tungsten, which can be present with a reducing agent such as an organic phosphorous acid or inorganic phosphorous acid, or tannic, gallic, and pyrogallic acid, or hydrazine, or sulphites, or tin II salts, nickel hydroxide or any organic or inorganic compound with an electrochemical potential sufficient to reduce the metal compounds to the metallic state. Preferably, the metal compound is antimony triglycolate and the reducing agent is hypophosphorous acid.

As a further alternative, the reheating agents can be incorporated into a polypropylene composition e.g. by one of the methods above, but in high concentration to form a masterbatch. The masterbatch may then be blended with polypropylene having a different (typically lower) concentration of reheating agent or preferably no reheating agent at all to form a polypropylene composition containing reheating agent in desired concentration.

The present invention provides a method of making polypropylene containers, such as bottles, and other polypropylene articles. Preferred articles are bottles, e.g. of 100 ml to 10 L in volume, e.g. 300 ml or 500 ml.

The invention will now be described further with reference to the following non-limiting examples.

### Analytical Tests

Values quoted in the description/examples are measured according to the following tests:

Melt flow rate (MFR), i.e. MFR₂, was measured according to ISO 1133 at 230°C and a load of 2.16 kg.

Comonomer content was determined in a known manner based on FTIR measurements calibrated with C¹³NMR.

Density is measured according to ISO 1183

Tensile modulus was measured on specimen according to ISO3167 (Multipurpose test specimen, type A (injected moulded)) according to ISO 527-2:1993.

Charpy, notched is measured according to ISO 179/1eA at 23°C using injection molded test specimen as described in EN ISO 1873-2 (80 x 10 x 4 mm)

SEC: The molecular weights and molecular weight distributions of polymers were determined with A Millipore Waters ALC/GPC operating at 135 °C and equipped with two mixed bed and one 107 Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes.

### Polymer Materials used and Preparation thereof:

The following polymer materials were used:

Sample U1: A unimodal random copolymer of propylene and ethylene having a ethylene content of 3.3 wt% and an MFR₂ of 20 g/10min

Sample U2: A unimodal propylene homopolymer of MFR₂ of 20 g/10min and density 920 kg/m³.

### Bimodal Samples:

A continuous multistage process was used to produce a polymer blend. The process comprised a prepolymerisation step, a loop reactor polymerisation and a fluidized bed gas phase reactor polymerisation.

The catalyst used was highly active, stereospecific transesterified MgCl₂-supported Ziegler-Natta catalyst prepared according to US 5,234,879 at a titanization temperature of 135 °C. The catalyst was contacted with a cocatalyst (triethylaluminium, TEAL), and an external donor (donor D, dicyclopentyl dimethoxysilane) with the Al/Ti ratio of 200 and an Al/D ratio of 5, to yield the catalyst system.

The catalyst system and propylene were fed into the prepolymerisation reactor which was operated at 30°C. The prepolymerised catalyst was used in the subsequent polymerisation reactors.

Propylene, hydrogen, prepolymerised catalyst and optionally ethylene were fed into the loop reactor which was operated as a bulk reactor at the temperatures as indicated in Table 1 and a pressure of 55 bar.

Then, the polymer slurry stream was fed from the loop reactor into the gas phase reactor which was operated at the temperatures as indicated in Table 1 and a pressure of 20 bar. Propylene, ethylene and hydrogen were fed into the gas phase reactor to control the desired properties of the final polymer.

**Table 1**

| | Bimodal A |
|---|---|
| Al/D (mol/mol) | 5 |
| Al/Ti | 200 |
| Loop/GPR Split % | 66/34 |

| Loop | |
|---|---|
| Temperature (°C) | 85 |
| MFR2 (g/10 min) | 10 |
| Ethylene content (wt-%) | 0 |
| GPR | |
| Temperature (°C) | 85 |

| Final product | |
|---|---|
| Ethylene content (wt-%) | 2,3 |
| MFR2 (g/10 min) | 18 |
| XS (%) | 4,7 |
| Tm(°C) | 164 |
| Tc(°C) | 129 |
| Charpy impact 23°C (kJ/m²) | 6,2 |
| Tensile modulus (MPa) | 1280 |

### Example 1

### Masterbatch

A polypropylene masterbatch was prepared by combining polymer sample U1 with Sb₂O₃ and H₂PO₃ in a conventional extruder. After extrusion and in situ Sb reduction, a masterbatch containing 2000 ppm Sb was formed.

### Example 2

### Processing Window

Polymer sample U1 was used alone or with 10 ppm Sb added in the form of the masterbatch of Example 1 (i.e. 0.5 wt% masterbatch). The composition was injection moulded to give PPreX® pre-forms of thickness 2.8 mm and with neck dimension 38/10 mm and weight 14g.

Polypropylene bottles (300 ml) were stretch blow moulded on a one-cavity SIG Corpoplast LB01HR machine from 14 g pre-forms. This machine is equipped with two heater boxes, each having 5 IR lamps, but only one box was used in the determination of processing windows. The setting ratio of the lamps in the heater box was L1/L2/L3/L4/L5 46/57/85/85/54. All preforms were heated for the same period of time, only total heating was changed. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. A pressure of 6 bar for 1.2 seconds was then used to blow up the bottle.

For each sample, the total heating energy was changed in steps and the resulting pre-form temperatures recorded to find the upper prefore temperature value and lower preform temperature at which bottles without visible failures can be blown. This range is defined as the processing window of biaxial stretching of bottles.

Visible failures will be readily determined by those skilled in the art. For example, temperatures that are too low for stretching causes the stretch rod to puncture the preform. Temperatures that are too high for stretching cause the polymer to melt and leads to variations in the thickness of the blown articles.

| **Material** | **Upper temp. °C** | **Lower temp. °C** | **Window** |
|---|---|---|---|
| No reheat | 127 | 124 | 3 |
| With reheat | 127 | 117 | 10 |

### Example 3

### Processing Window

Further tests where carried out on the polymer materials listed below with 10 ppm Sb (added as the masterbatch of Example 1) for U1, 6 ppm Sb (added as the masterbatch of Example 1) for U2 and 1 ppm (added as the masterbatch of Example 1) for Bimodal A. The procedure is the same as Example 2 except the preforms weighed 17 g.

The results are presented in Table 2.

**Table 2**

| **Material** | **Lower Heating value** | **Upper Heating value** | **Lower temp.** | **Upper temp.** | **Window** |
|---|---|---|---|---|---|
| U 1 | 62 | 68 | 133 | 137 | 4 |
| U 1 with reheat | 57 | 67 | 134 | 140 | 6 |
| U2 | 75 | 79 | 154 | 156 | 2 |
| U2 with reheat | 70 | 78 | 154 | 157 | 3 |
| Bimodal A | 69 | 85 | 151 | 156 | 5 |
| Bimodal A with reheat | 69 | 85 | 151 | 158 | 7 |

## Claims

1. Use of at least one reheating agent to broaden the processing window in the injection stretch blow moulding of polypropylene.

2. Use as claimed in claim 1 wherein said reheating agent is Sb.

3. Use as claimed in claim 2 wherein the Sb is generated in situ via reduction of an Sb containing compound.

4. Use as claimed in any preceding claim wherein said reheating agent is present in an amount of from 1 to 50 ppm (wt).

5. Use as claimed in any preceding claim wherein said polypropylene is a unimodal random propylene copolymer.

6. Use as claimed in any preceding claim wherein the processing window during injection stretch blow moulding is at least 4°C.

7. Use as claimed in any preceding claim wherein the processing window during injection stretch blow moulding is at least 6°C.

8. Use as claimed in any preceding claim wherein the processing window is broadened by at least 20%

9. Use as claimed in any preceding claim wherein the processing window is broadened by at least 40%.

10. A composition comprising a multimodal propylene polymer and at least one reheating agent selected from antimony, titanium, copper, manganese, iron and tungsten.

11. A composition as claimed in claim 10 wherein said multimodal propylene polymer comprises:
(A) a polypropylene homopolymer or a propylene random copolymer comprising propylene and up to 10 weight % of comonomer selected from ethylene and/or C₄₋₁₀ alpha olefin; and
(B) a random copolymer of propylene and comonomer selected from ethylene and/or C₄₋₁₀ alpha olefin.

12. A composition as claimed in claim 11 wherein said reheating agent is Sb.

13. A process for the formation of an article comprising:
(I) mixing at least one reheating agent with a polypropylene polymer;
(II) extruding the resulting mixture and injecting the extrudate into a mould to form a preform; and
(III) stretching and blowing the preform to form an article without allowing the preform to cool.

14. A process for the formation of an article comprising:
(I) mixing at least one reheating agent with a polypropylene polymer;
(II) extruding the resulting mixture and injecting the extrudate into a mould to form a preform:
(III) allowing the preform to cool;
(IV) reheating the preform to a temperature in the range 100 to 160°C; and
(V) stretching and blowing the preform to form an article.

15. A method of broadening the processing window of a polypropylene polymer in an ISBM process comprising adding to said polypropylene at least one reheating agent.
